# EUROPÄISCHE PATENTANMELDUNG

(11) **EP 4 686 074 A1**
(43) Veröffentlichungstag der Anmeldung: **28.01.2026**
(21) Anmeldenummer: 25185100.2
(22) Anmeldetag: 25.06.2025
(51) Int. Cl.: H02M 7/219, H02M 1/00

(54) **STROMRICHTER MIT HILFSSPANNUNGSVERSORGUNG**

(30) Priorität: 23.07.2024 DE 102024206907
(71) Anmelder: Siemens Aktiengesellschaft, 80333 München (DE)
(72) Erfinder: Unterweger, Siegmar, 81549 München (DE); Lee, Young Hun, 85598 Baldham (DE)
(74) Vertreter: Siemens Patent Attorneys

(57) **Zusammenfassung**

Es wird ein Stromrichter zur Umwandlung einer ersten in eine zweite Spannung angegeben mit:
- einem ersten Gleichrichter mit einer Mehrzahl von steuerbaren Leistungshalbleiterschaltern,
- einem mit der Gleichspannungsseite des ersten Gleichrichters verbundenen ersten Gleichspannungs-Zwischenkreis,
- einer Steuerung für die Leistungshalbleiterschalter,
- einem zweiten Gleichspannungs-Zwischenkreis,
- einem eingangsseitig mit dem zweiten Gleichspannungs-Zwischenkreis verbundenen Gleichspannungs-Wandler, ausgestaltet zur Herabsetzung der am zweiten Gleichspannungs-Zwischenkreis anliegenden Spannung, wobei der Gleichspannungs-Wandler ausgangsseitig mit Versorgungsanschlüssen der Steuerung verbunden ist,
- einer Verbindung zwischen den oberen Polen des ersten und zweiten Gleichspannungs-Zwischenkreises,
- einer Verbindung zwischen den unteren Polen des ersten und zweiten Gleichspannungs-Zwischenkreises,

einer ersten Diode in einer ersten der beiden Verbindungen,
einem zweiten Gleichrichter, der ein passiver Gleichrichter ist und dessen Gleichspannungsseite mit dem zweiten Zwischenkreis verbunden ist und dessen Wechselspannungsseite mit der Wechselspannungsseite des ersten Gleichrichters verbunden ist.

## Beschreibung

Die Erfindung betrifft einen bidirektionalen Stromrichter zur Umwandlung einer ersten in eine zweite Spannung, wobei der Stromrichter einen Gleichrichter mit einer Mehrzahl von steuerbaren Leistungshalbleiterschaltern, einen mit der Gleichspannungsseite des Gleichrichters verbundenen Gleichspannungs-Zwischenkreis und eine Steuerung für die Leistungshalbleiterschalter aufweist.

Für ins Netz einspeisende Umrichter gelten Normen, die das Verhalten des Umrichters vorschreiben. Eine davon betrifft den sog. UVRT (under voltage ride through). Dafür ist geregelt, dass der Umrichter auch bei einem Einbruch der Netzspannung am Netz bleiben muss und, sobald sich die Netzspannung wieder innerhalb der Grenzwerte befindet, wieder ins Netz einspeist. Ist die Netzspannung aber zu klein, fällt auch die Steuereinheit des Umrichters aus. Ein sich hier stellendes Problem ist also die Versorgung der Steuereinheit bei Netzfehlern.

Eine bekannte Lösung besteht in dem Einbau zweier Hilfsversorgungen. Eine erste Hilfsversorgung dient für das Anlaufen aus dem Netz. Eine zweite Hilfsversorgung wird aus dem Zwischenkreis des Umrichters versorgt. Im Falle von PV-Wechselrichtern kann die zweite Hilfsversorgung auch aus der PV-Seite gespeist werden. Nachteilig an den bekannten Lösungen ist, dass sie einem bidirektionalen Stromrichter zur Einhaltung der Normen einige Komplexität und Baugröße zufügen.

Es ist Aufgabe der Erfindung, einen bidirektionalen Stromrichter anzugeben, bei dem die eingangs genannten Nachteile vermieden werden.

Diese Aufgabe wird durch den Stromrichter mit den in Anspruch 1 angegebenen Merkmalen gelöst.

Der erfindungsgemäße Stromrichter ist zur Umwandlung einer ersten in eine zweite Spannung ausgestaltet. Er umfasst einen ersten Gleichrichter mit einer Mehrzahl von steuerbaren Leistungshalbleiterschaltern, einen mit der Gleichspannungsseite des ersten Gleichrichters verbundenen ersten Gleichspannungs-Zwischenkreis und eine Steuerung für die Leistungshalbleiterschalter.

Er umfasst weiterhin einen zweiten Gleichspannungs-Zwischenkreis, einen eingangsseitig mit dem zweiten Gleichspannungs-Zwischenkreis verbundenen Gleichspannungs-Wandler, ausgestaltet zur Herabsetzung der am zweiten Gleichspannungs-Zwischenkreis anliegenden Spannung, wobei der Gleichspannungs-Wandler ausgangsseitig mit Versorgungsanschlüssen der Steuerung verbunden ist.

Er umfasst ferner eine Verbindung zwischen den oberen Polen des ersten und zweiten Gleichspannungs-Zwischenkreises sowie eine Verbindung zwischen den unteren Polen des ersten und zweiten Gleichspannungs-Zwischenkreises, wobei eine erste Diode in einer ersten der beiden Verbindungen angeordnet ist.

Schließlich umfasst der Stromrichter einen zweiten Gleichrichter, der ein passiver Gleichrichter ist und dessen Gleichspannungsseite mit dem zweiten Zwischenkreis verbunden ist und dessen Wechselspannungsseite mit der Wechselspannungsseite des ersten Gleichrichters verbunden ist.

Üblicherweise wird als erste Spannung eine Netzspannung an den Stromrichter angeschlossen, beispielsweise ein dreiphasiges 400 V-Netz.

Die Erfindung vereint die beiden Versorgungen für die Steuerung aus dem Netz und aus dem Gleichspannungs-Zwischenkreis. Dafür wird der Gleichspannungswandler, bevorzugt ein Sperrwandler (Flyback) durch die erste Diode vom Zwischenkreis entkoppelt und ein eigener Zwischenkreis, der zweite Gleichspannungs-Zwischenkreis, erzeugt.

Im Standby-Betrieb wird dieser vorteilhaft aus dem Netz, also durch die erste Spannung, gespeist. Im aktiven Betrieb des Stromrichters ist die Zwischenkreisspannung größer als die gleichgerichtete Netzspannung und der Gleichspannungswandler wird aus dem Zwischenkreis gespeist.

Vorteilhafte Ausgestaltungen des erfindungsgemäßen Stromrichters gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Die erste Diode ist zweckmäßig blockierend für einen Stromfluss aus dem zweiten in den ersten Gleichspannungs-Zwischenkreis angeordnet. Es wird mit anderen Worten nur ein Leistungsfluss zum Gleichspannungswandler erlaubt.

Der zweite Gleichrichter ist bevorzugt eine dreiphasige Diodenbrücke. Diese umfasst bekanntlich sechs Dioden, die nach Art dreier paralleler Halbbrücken angeordnet sind.

Alternativ kann der zweite Gleichrichter eine einphasige Diodenbrücke sein mit 4 Dioden. In diesem Fall ist einer der Wechselspannungs-Eingänge der Diodenbrücke zweckmäßig mit einem Neutralleiter des Stromrichters verbunden, während der andere Wechselspannungs-Eingang mit einem der drei Phasen verbunden ist.

In einer bevorzugten Ausgestaltung der Erfindung ist eine zweite Diode in einer zweiten der beiden Verbindungen vorhanden. Mit anderen Worten ist jeweils eine Diode oder eine Diodenserie in beiden Verbindungen, wobei zweckmäßig beide Dioden so angeordnet sind, dass sie blockierend für einen Stromfluss aus dem zweiten in den ersten Gleichspannungs-Zwischenkreis wirken.

Der Stromrichter ist bevorzugt zum Anschluss an eine dreiphasige Versorgungsspannung als erste Spannung ausgestaltet. Der erste Gleichrichter ist bevorzugt wechselspannungsseitig mit einem EMV-Filter verbunden, das seinerseits an die erste Spannung, also das Versorgungsnetzwerk angeschlossen ist. Der zweite Gleichrichter ist bevorzugt wechselspannungsseitig zwischen dem EMV-Filter und dem ersten Gleichrichter angeschlossen.

Der Stromrichter kann eine Schalteinrichtung zwischen dem ersten Gleichrichter und dem EMV-Filter aufweisen, insbesondere einen mechanischen Schalter zur Trennung vom Versorgungsnetzwerk. Der zweite Gleichrichter ist dann zweckmäßig wechselspannungsseitig zwischen dem EMV-Filter und dem Schalter angeschlossen.

Wenn im vorliegenden Text von einzelnen Bauelementen die Rede ist wie beispielsweise Dioden oder Leistungshalbleiter-Schaltern, dann kann damit auch immer eine Serienschaltung mehrerer solcher Bauteile gemeint sein. Durch eine Serienschaltung kann eine Anpassung an die konkret vorliegende Maximalspannung vorgenommen werden.

Im Folgenden wird die Erfindung anhand der in den Figuren dargestellten Ausführungsbeispiele näher beschrieben und erläutert. Es zeigen:
- Figur 1: einen ersten Stromrichter mit einer Steuerung und einer Hilfsstromversorgung für die Steuerung,
- Figur 2: einen zweiten Stromrichter mit einer Steuerung und einer Hilfsstromversorgung für die Steuerung.

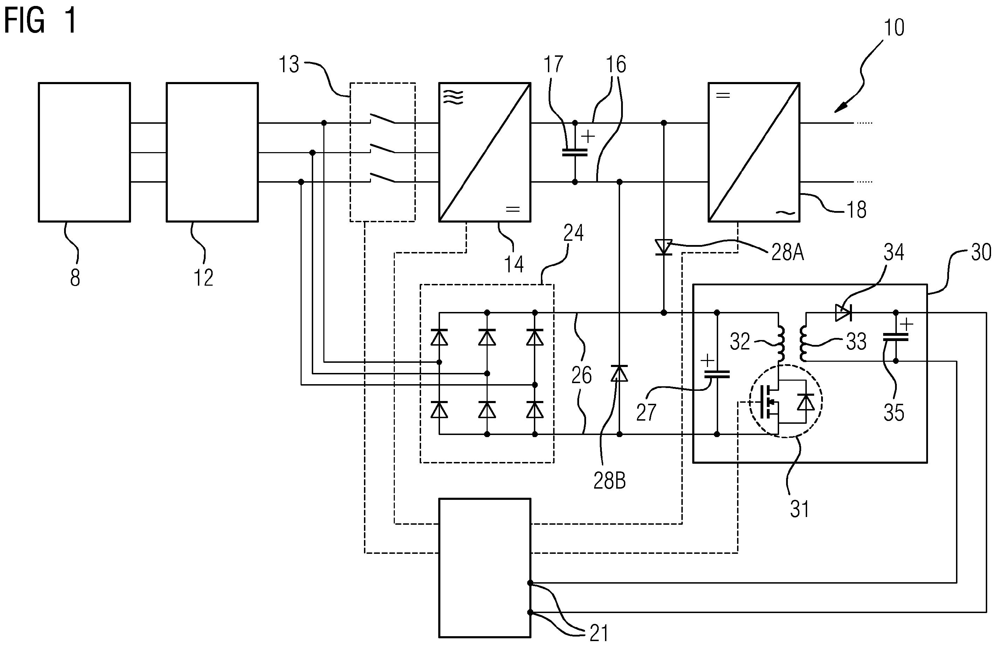

Figur 1 zeigt einen Stromrichter 10 gemäß einem ersten Ausführungsbeispiel für die Erfindung. Der Stromrichter 10 ist an einem dreiphasigen Versorgungsnetz 8 angeschlossen. Er umfasst ein EMV-Filter 12, einen ersten Gleichrichter 14 (auch als "Power Factor Correction" PFC bezeichnet), einen ersten Gleichspannungs-Zwischenkreis 16 und einen Ausgangsstromrichter.

Das EMV-Filter 12, der erste Gleichrichter 14 und der Ausgangsstromrichter 18 sind nicht im Detail dargestellt. Mögliche Aufbauten dafür sind aus dem Stand der Technik bekannt. Beispielsweise kann der Gleichrichter 14 drei parallel geschaltete Halbbrücken mit jeweils zwei oder mehr seriellen Leistungshalbleiter-Schaltern, beispielsweise IGBTs oder MOSFETs, umfassen, deren Außenanschlüsse mit dem ersten Gleichspannungs-Zwischenkreis 16 verbunden sind.

Der Ausgangsstromrichter kann beispielsweise ein Wechselrichter 18 sein. Der Wechselrichter kann analog zum Gleichrichter 14 aufgebaut sein. Mit einem Wechselrichter, der eine Rücktransformation aus dem ersten Gleichspannungs-Zwischenkreis 16 in eine dreiphasige Wechselspannung vornimmt, kann beispielsweise ein Elektromotor betrieben werden.

Der Ausgangsstromrichter kann aber auch beispielsweise einen DC/DC-Wandler umfassen. Dieser kann beispielsweise einer galvanischen Trennung und/oder Änderung des Spannungsniveaus dienen. Mit einem solchen Aufbau kann beispielsweise eine DC-Ladestation für das kabelgebundene Laden eines Elektro-Fahrzeugs realisiert werden.

Der Ausgangsstromrichter ist in diesem Ausführungsbeispiel ein Wechselrichter 18 mit einphasigem Ausgang. Eine solcher Wechselrichter kann beispielsweise den Strom für eine Spule liefern, die das Bodenelement einer Vorrichtung für das kabelgebundene oder drahtlose Laden eines Elektro-Fahrzeugs bildet.

Das EMV-Filter 12 ist direkt mit dem Versorgungsnetz 8 verbunden. Zwischen dem Gleichrichter 14 und dem EMV-Filter 12 ist ein Schalter 13 zur Auftrennung der elektrischen Verbindung angeordnet. Der Gleichspannungs-Zwischenkreis 16 ist zwischen dem Gleichrichter 14 und dem Ausgangsstromrichter 18 angeordnet und umfasst einen oder mehrere serielle Kondensatoren 17.

Der Stromrichter 10 umfasst weiterhin eine Steuerung 20, die Steuersignale für die vorhandenen Leistungshalbleiter-Schalter erzeugt und dafür zweckmäßig mit den Gate-Treiber-Schaltungen für die Schalter verbunden ist. Die Steuerung umfasst Versorgungs-Anschlüsse 21 für eine Versorgungsspannung, mit deren Hilfe die internen Komponenten der Steuerung wie beispielsweise ein Mikrocontroller betrieben werden und Steuersignale erstellt werden. Bekanntermaßen muss eine solche Versorgungsspannung in einem Spannungsbereich von grob zwischen 1 V und 50 V liegen. Beispielhafte Werte für eine Versorgungsspannung sind 5 V, 12 V, 24 V oder 48 V. Damit liegt die Versorgungsspannung weitab von den typischen Zwischenkreis-Spannungen von beispielsweise 650 V, 800 V, 1000 V oder mehr.

Zur Bereitstellung der Versorgungsspannung umfasst der Stromrichter 10 weitere Komponenten. Zwischen dem EMV-Filter 12 und dem Schalter 13 ist ein zweiter Gleichrichter 24 angeschlossen. Der zweite Gleichrichter 24 ist ein Diodenbrücken-Gleichrichter, der sechs nach Art von parallelen Halbbrücken geschaltete Dioden umfasst. An seinem gleichspannungsseitigen Ausgang ist der zweite Gleichrichter 24 mit einem zweiten Gleichspannungs-Zwischenkreis 26 verbunden. Der zweite Gleichspannungs-Zwischenkreis 26 umfasst einen oder mehrere Zwischenkreis-Kondensatoren 27.

Der zweite Gleichspannungs-Zwischenkreis 26 ist weiterhin mit seinen Polen mit den entsprechenden Polen des Gleichspannungs-Zwischenkreises 16 verbunden. Dabei ist in jeder der beiden Verbindungen eine Diode 28A, B vorhanden. Die Dioden 28A, B sind so angeordnet, dass sie einen Stromfluss vom zweiten Gleichspannungs-Zwischenkreis 26 zum Gleichspannungs-Zwischenkreis 16 blockieren. Mit anderen Worten lassen die Dioden 28A, B eine Aufladung des zweiten Gleichspannungs-Zwischenkreises 26 aus dem Gleichspannungs-Zwischenkreis 16 zu, aber nicht umgekehrt.

Der zweite Gleichspannungs-Zwischenkreis 26 ist weiterhin mit der Eingangsseite eines Sperrwandlers (Flyback) 30 verbunden. Der Sperrwandler 30 umfasst eingangsseitig eine Serienschaltung eines steuerbaren Leistungshalbleiter-Schalters 31 und einer Spule 32 als Primärseite eines Transformators. Ausgangsseitig umfasst der Sperrwandler 30 einen Kreis aus einer Spule 33 als Sekundärseite des Transformators, einer Diode 34 zur Gleichrichtung und eines Glättungskondensators 35, an dessen Anschlüssen die Ausgangsspannung anliegt. Diese Anschlüsse sind mit den Versorgungs-Anschlüssen 21 der Steuerung 20 verbunden.

Da die Spannung im zweiten Gleichspannungs-Zwischenkreis 26 im Wesentlichen derjenigen im Gleichspannungs-Zwischenkreis 16 entspricht, sind die Komponenten des Sperrwandlers 30 auf eine entsprechende Spannung ausgelegt. Insbesondere weist der Leistungshalbleiter-Schalter 31 eine passende Sperrspannung auf. Die Dioden des zweiten Gleichrichters 24 können jeweils auch durch eine Serienschaltung mehrerer Dioden gebildet sein. Ebenso können die Dioden 28A, B jeweils durch eine Serienschaltung mehrerer Dioden gebildet sein.

Befindet sich der Stromrichter 10 im Standby, dann wird der zweite Gleichspannungs-Zwischenkreis 26 aus dem Netz gespeist. Im aktiven Betrieb des Stromrichters 10 ist die Spannung im Gleichspannungs-Zwischenkreis 16 größer als die gleichgerichtete Netzspannung und der Sperrwandler 30 wird aus dem Gleichspannungs-Zwischenkreis 16 gespeist.

Fällt die Netzspannung aus, dann kann die für den Betrieb der Steuerung 20 nötige Energie für eine gewisse Zeit weiterhin aus dem Gleichspannungs-Zwischenkreis 16 entnommen werden.

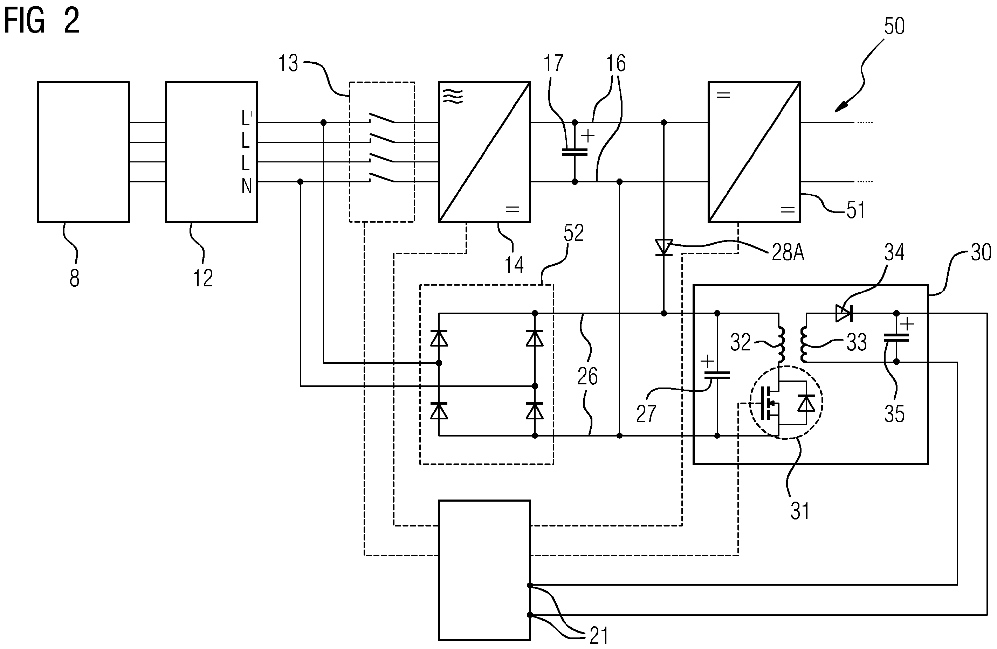

Figur 2 zeigt eine zweite beispielhafte Ausführungsform für die Erfindung. Der Stromrichter 50 entspricht weitgehend dem Stromrichter 10 der Figur 1. Die Unterschiede werden im Folgenden dargestellt.

Ausgangsseitig umfasst der Stromrichter 50 statt dem Wechselrichter 18 einen DC/DC-Wandler 51.

Weiterhin entfällt beim Stromrichter 50 die Diode 28B. Mit anderen Worten besteht also eine direkte Verbindung zwischen den negativen Polen der beiden Gleichspannungs-Zwischenkreise 16, 26. Durch die Diode 28A ist weiterhin sichergestellt, dass eine Entladung des zweiten Gleichspannungs-Zwischenkreises 26 zum Gleichspannungs-Zwischenkreis 16 nicht stattfindet. Durch diese Änderung wird das Zwischenkreispotenzial des Umrichters verschoben.

Schließlich ist beim Stromrichter 50 der zweite Gleichrichter 24 ersetzt durch einen einphasigen Brücken-Gleichrichter 52 mit vier Dioden. Der Brücken-Gleichrichter 52 ist zweckmäßig mit dem Neutralleiter N verbunden, der dafür beim Stromrichter 50 vorhanden sein muss.

Die beschriebenen drei Änderungen zum Stromrichter 10 sind voneinander unabhängig und können in verschiedenen Ausgestaltungen eines erfindungsgemäßen Stromrichters gar nicht, einzeln oder in Kombination vorhanden sein.

### Bezugszeichen

- 8: Versorgungsnetzwerk
- 10, 50: Stromrichter
- 12: EMV-Filter
- 13: Schalter
- 14: erster Gleichrichter
- 16, 26: Gleichspannungs-Zwischenkreis
- 17, 27: Zwischenkreis-Kondensator
- 18: Wechselrichter
- 20: Steuerung
- 21: Versorgungskontakte
- 24: dreiphasiger Brücken-Gleichrichter
- 28A, B: Diode
- 30: Sperrwandler
- 31: Leistungshalbleiter-Schalter
- 32, 33: primäre/sekundäre Spule
- 34: Gleichrichter-Diode
- 35: Glättungskondensator
- 51: DC/DC-Wandler
- 52: einphasiger Brücken-Gleichrichter
- N: Neutralleiter

## Patentansprüche

1. Stromrichter (10, 50) zur Umwandlung einer ersten in eine zweite Spannung mit:
- einem ersten Gleichrichter (14) mit einer Mehrzahl von steuerbaren Leistungshalbleiterschaltern,
- einem mit der Gleichspannungsseite des ersten Gleichrichters (14) verbundenen ersten Gleichspannungs-Zwischenkreis (16),
- einer Steuerung (20) für die Leistungshalbleiterschalter,
- einem zweiten Gleichspannungs-Zwischenkreis (26),
- einem eingangsseitig mit dem zweiten Gleichspannungs-Zwischenkreis (26) verbundenen Gleichspannungs-Wandler (30), ausgestaltet zur Herabsetzung der am zweiten Gleichspannungs-Zwischenkreis (26) anliegenden Spannung, wobei der Gleichspannungs-Wandler (30) ausgangsseitig mit Versorgungsanschlüssen (21) der Steuerung (20) verbunden ist,
- einer Verbindung zwischen den oberen Polen des ersten und zweiten Gleichspannungs-Zwischenkreises (16, 26),
- einer Verbindung zwischen den unteren Polen des ersten und zweiten Gleichspannungs-Zwischenkreises (16, 26),
einer ersten Diode (28A) in einer ersten der beiden Verbindungen,
einem zweiten Gleichrichter (24), der ein passiver Gleichrichter ist und dessen Gleichspannungsseite mit dem zweiten Zwischenkreis (26) verbunden ist und dessen Wechselspannungsseite mit der Wechselspannungsseite des ersten Gleichrichters (14) verbunden ist.

2. Stromrichter (10, 50) nach Anspruch 1, bei dem die erste Diode (28A) blockierend für einen Stromfluss aus dem zweiten in den ersten Gleichspannungs-Zwischenkreis (16, 26) angeordnet ist.

3. Stromrichter (10, 50) nach Anspruch 1 oder 2, bei dem der zweite Gleichrichter (24) eine dreiphasige Diodenbrücke (24) ist und wenigstens 6 Dioden umfasst.

4. Stromrichter (10, 50) nach Anspruch 1 oder 2, bei dem der zweite Gleichrichter eine einphasige Diodenbrücke ist und 4 Dioden umfasst.

5. Stromrichter (10, 50) nach Anspruch 4, bei dem der zweite Gleichrichter eingangsseitig mit einem Neutralleiter verbunden ist.

6. Stromrichter (10, 50) nach einem der vorangehenden Ansprüche mit einer zweiten Diode (28B) in einer zweiten der beiden Verbindungen.

7. Stromrichter (10, 50) nach Anspruch 6, bei dem die zweite Diode (28B) blockierend für einen Stromfluss aus dem zweiten in den ersten Gleichspannungs-Zwischenkreis (16, 26) angeordnet ist.

8. Stromrichter (10, 50) nach einem der vorangehenden Ansprüche, ausgestaltet zum Anschluss an eine dreiphasige Versorgungsspannung (8) als erste Spannung.

9. Stromrichter (10, 50) nach einem der vorangehenden Ansprüche, bei dem der erste Gleichrichter (14) wechselspannungsseitig mit einem EMV-Filter (12) verbunden ist.

10. Stromrichter (10, 50) nach Anspruch 9, bei dem der zweite Gleichrichter (24) wechselspannungsseitig zwischen dem EMV-Filter (12) und dem ersten Gleichrichter (14) angeschlossen ist.

11. Stromrichter (10, 50) nach Anspruch 9 oder 10 mit einer Schalteinrichtung zwischen dem ersten Gleichrichter (14) und dem EMV-Filter (12).
